# FASCICULE DE BREVET EUROPEEN

(11) **EP 1 165 307 B1**
(45) Date de publication et mention de la délivrance du brevet: **02.07.2003**
(21) Numéro de dépôt: 00916957.4
(22) Date de dépôt: 16.03.2000
(51) Int. Cl.: B29D 30/54, B29C 33/50

(54) **MOULE ELASTIQUE POUR BANDE DE ROULEMENT**
ELASTISCHES FORMWERKZEUG FÜR DIE REIFENLAUFFLÄCHENFORMUNG
ELASTIC MOULD FOR RUNNING TREAD

(30) Priorité: 19.03.1999 FR 9903500
(43) Date de publication de la demande: 02.01.2002
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: CHAMOY, François, F-63400 Chamalieres (FR)
(74) Mandataire: Cohen, Sylvia
(86) Numéro de dépôt international: EP0002320
(87) Numéro de publication internationale: WO00056530

(56) Documents cités:
- DE-B- 1 025 132
- US-A- 3 837 385
- US-A- 4 053 265
- US-A- 4 058 422
- US-A- 4 767 480

## Description

L'invention concerne un moule élastique pour bande de roulement notamment destiné à des procédés de chapage de carcasses de pneumatiques vulcanisées. Aujourd'hui, on fait appel à ces procédés généralement dans le cadre du rechapage mais, bien entendu, tout ce qui sera dit dans la suite est valable pour le chapage de carcasses de pneumatiques neuves.

Il existe deux principaux types de procédé de rechapage consistant pour l'un, couramment appelé « rechapage à froid », à utiliser une bande de roulement précuite que l'on dispose sur une carcasse prête à être rechapée, puis à cuire l'ensemble en utilisant des moyens de chauffage tels qu'une étuve; l'autre procédé, dit "rechapage à chaud », consiste à poser une bande de roulement crue, sous forme notamment de feuilles, de bandelettes ou de profil, sur une carcasse prête à être rechapée, puis à cuire l'ensemble dans un moule.

Ces procédés de rechapage à chaud s'appliquent en particulier au rechapage de pneumatiques de grandes dimensions tels que des pneumatiques destinés aux poids lourds, machines agricoles, véhicules de génie civil, etc., pour lesquels des problèmes de manutention et de déformation de bandes de roulement rendent difficile leur utilisation sous une forme précuite. L'invention se situe dans le domaine du rechapage à chaud.

Parmi les procédés de rechapage à chaud, la publication US 4 053 265 décrit un procédé qui consiste à utiliser un moule annulaire élastique comportant des ailes latérales, préférentiellement réalisé en caoutchouc, destiné à permettre le moulage et la vulcanisation de la bande de roulement. Ce moule élastique est disposé sur la carcasse de pneumatique à rechaper qui a été préalablement recouverte par une bande de roulement crue, l'ensemble moule-carcasse étant ensuite entièrement enveloppé par une membrane assurant l'étanchéité. Cet ensemble est ensuite placé dans une étuve pour la cuisson après réalisation du vide dans la membrane.

Afin de disposer le moule élastique sur la bande de roulement, on étire ce dernier et, en le maintenant en position étirée, on dispose à l'intérieur de celui-ci la carcasse recouverte de ladite bande, puis on laisse le moule se comprimer sur la bande de roulement.

Généralement pour cette opération, on utilise un outillage réalisant une préhension des ailes du moule élastique puis un recul radial de ces dernières entraînant l'étirement de l'ensemble du moule et donc son augmentation en diamètre. Cependant, cette opération pose de nombreuses difficultés. En effet, cet étirement agit davantage sur les ailes et les bords périphériques du moule que sur sa zone centrale, ce qui crée une répartition hétérogène de la déformation du moule et le soumet à de fortes contraintes. De plus, pour permettre à la zone centrale du moule d'adopter un diamètre supérieur à celui de la bande de roulement crue, il est nécessaire d'exercer sur les ailes du moule un effort très important, ce qui peut provoquer le dépassement du seuil d'élasticité des ailes du moule, amorcer des déchirures et, en outre, ne pas nécessairement suffire pour que la transmission de l'effort de traction sur les ailes entraîne l'étirement de la zone centrale du moule.

Ce phénomène a également des conséquences sur le pneumatique lui-même lors du démoulage. En effet, dans la mesure où on n'étire pas directement la zone centrale du moule, il y a des difficultés de démoulage au centre de la bande de roulement cuite. Ainsi il n'est donc pas possible avec ce type de moule de réaliser le rechapage d'une enveloppe de pneumatique dont le rapport de forme H/S est élevé, H étant la hauteur de l'enveloppe de pneumatique montée sur jante et gonflée à sa pression de service et S la largeur maximale de l'enveloppe.

Par ailleurs, suite à la mise en place de l'enveloppe de pneumatique à l'intérieur du moule, on laisse ce dernier se comprimer sur la bande de roulement sans que rien ne permette de contrôler si le fond de sculpture réalisé dans la bande de roulement crue laisse une épaisseur suffisante de mélange caoutchouteux par rapport à la carcasse de pneumatique ou, au contraire, une épaisseur trop importante.

L'invention concerne un moule élastique permettant de pallier ces inconvénients.

Selon l'invention, le moule annulaire élastique destiné à assurer le moulage d'une bande de roulement crue recouvrant une carcasse de pneumatique vulcanisée, le moule étant réalisé en matériau caoutchouteux, comporte un dispositif de limitation de son diamètre en compression.

L'invention concerne également un dispositif de chapage d'une carcasse de pneumatique comprenant un moule annulaire élastique conforme à l'invention, qui comprend également une jante de montage de la carcasse de pneumatique à chaper et deux flasques élastiques destinés à recouvrir respectivement la surface extérieure de l'enveloppe de pneumatique constituée par ladite carcasse et une bande de roulement crue la recouvrant, comprise entre un bourrelet de ladite enveloppe et le bord périphérique du moule correspondant.

Dans la suite, le choix des directions radiales et axiales pour le dispositif de rechapage ainsi que pour le pneumatique est relatif aux axes généralement utilisés comme référence dans le pneumatique, la direction axiale correspondant à une direction parallèle à l'axe de rotation de l'enveloppe de pneumatique, les plans radiaux étant des plans contenant un rayon de l'enveloppe de pneumatique et passant par ledit axe de rotation.

D'autres caractéristiques et avantages de l'invention apparaîtront à la lecture d'un exemple de réalisation d'un moule élastique conforme à l'invention en référence au dessin annexé dans lequel :
- la figure 1 est une représentation perspective partiellement écorchée du moule conforme à l'invention,
- la figure 2 est une coupe radiale partielle du moule monté sur une enveloppe de pneumatique.

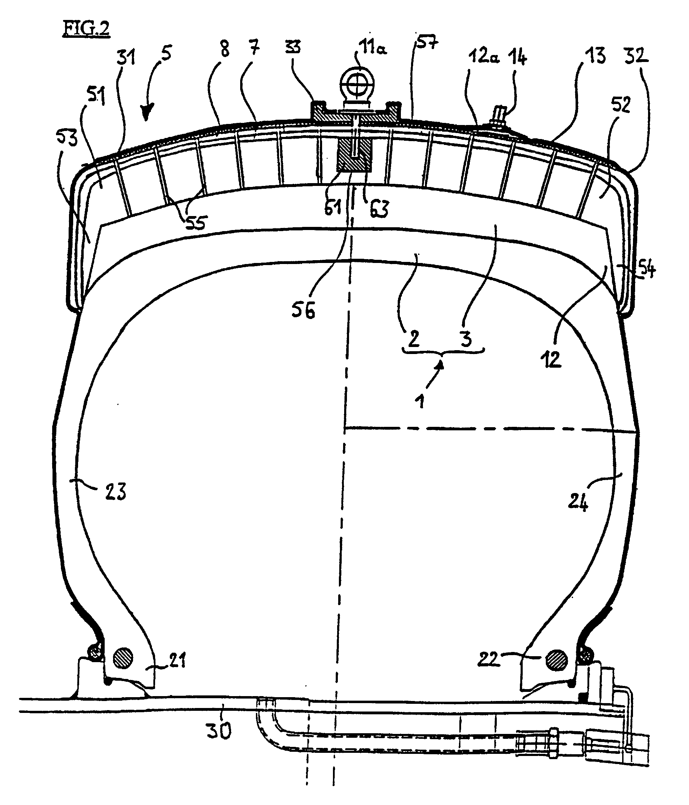

Selon la figure 2, on considérera une enveloppe de pneumatique à rechaper 1 comprenant une carcasse 2 comportant notamment deux bourrelets 21, 22 et deux flancs 23, 24 recouverte d'une bande de roulement crue 3 épaulée, la bande de roulement ayant été déposée sur la carcasse 2 par tout moyen approprié; les épaules 11, 12 de la bande de roulement 3 reliant le sommet de ladite bande aux flancs 23, 24.

Le moule élastique 5 se présente sous la forme d'un anneau dont la surface intérieure définit le moulage de la bande de roulement et qui possède des bords périphériques annulaires 51, 52 qui se prolongent sous forme d'ailes 53, 54 destinées à recouvrir respectivement les épaules 11, 12 de l'enveloppe de pneumatique 1. On désignera par 57 le sommet du moule 5.

Le moule annulaire 5 doit être suffisamment élastique dans une direction orientée radialement vers l'extérieur et doit résister à la chaleur de vulcanisation sans se déformer. Le moule doit également accepter de subir de multiples remises en température et résister au déchirement. On peut, à titre d'exemple, utiliser pour former ce moule annulaire un élastomère approprié pour obtenir les propriétés ci-dessus.

Ainsi, lorsque le moule 5 est étiré, son diamètre intérieur est supérieur au diamètre extérieur de l'enveloppe de pneumatique 1 comportant la bande de roulement crue 3, ce qui permet la mise en place du moule 5 sur cette dernière.

Un tel moule peut être réalisé à titre d'exemple conformément au procédé présenté dans la publication US 3 983 193 dans lequel on utilise une enveloppe de pneumatique neuve, en tant que "modèle de moulage", que l'on recouvre par une bande de caoutchouc vulcanisable crue. L'ensemble ainsi constitué est placé dans une étuve, après avoir été mis sous vide grâce à une membrane entourant cet ensemble, aux fins de réaliser la vulcanisation du moule. Le motif de moulage apparaissant sur la surface intérieure du moule correspondant au négatif de la sculpture de la bande de roulement de l'enveloppe de pneumatique neuve utilisée.

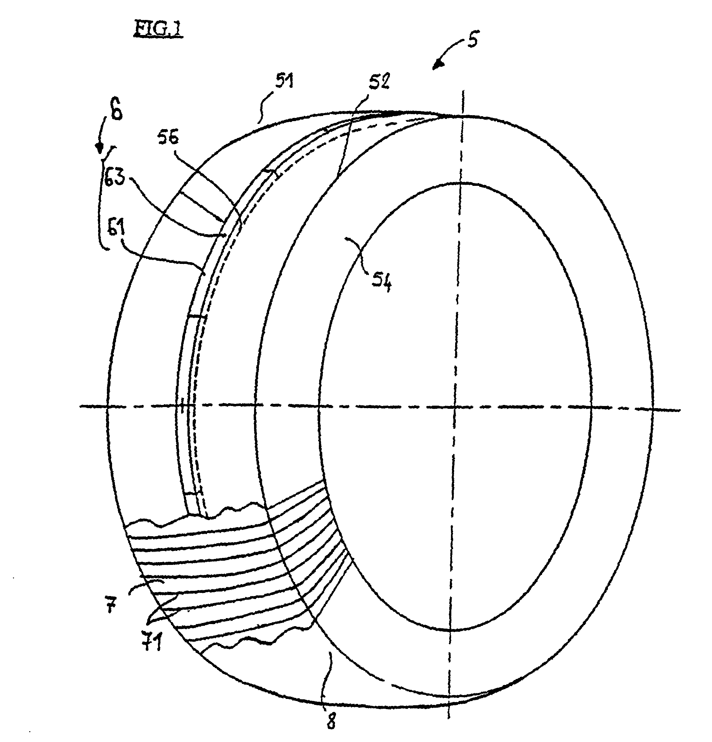

Comme le montre la figure 1, on usine sur la surface extérieure de ce dernier une rainure circonférentielle 56 à l'intérieur de laquelle on va placer des éléments secteurs métalliques jointifs 61 sous forme de secteurs qui constituent une couronne métallique 6 dimensionnelle ne dépassant pas en épaisseur de la surface extérieure du moule. Ces éléments 61 sont placés juxtaposés et maintenus dans la rainure 56 par une faible pression d'ajustement. Les éléments métalliques 61 sont dimensionnés de sorte à parfaitement correspondre à la dimension de la rainure 56 dans la mesure où leur simple mise en place constitue leur maintien dans la rainure sans utilisation d'autres moyens de fixation. Ainsi ces éléments 61 pourront se déplacer librement circonférentiellement dans leur logement (la rainure) lors de l'extension du moule tout en restant à l'intérieur de ladite rainure.

Les éléments 61 sont également dimensionnés de sorte à être jointifs en position de repos du moule 5 ce qui limite ainsi à ce diamètre au repos, la compression possible dudit moule. En effet, le coefficient de frottement entre les surfaces métalliques des éléments 61 et les surfaces de caoutchouteuses de la rainure 56 est tel qu'il empêche toute sortie des éléments métalliques hors de la rainure lors de la compression du moule 5.

Dans chaque élément 61 de la couronne métallique 6, on a percé en leur centre un trou taraudé 63 qui va permettre le positionnement ultérieur d'un anneau de traction 11a extérieurement au moule 5 comme le montre la figure 2, ces anneaux de traction 11a étant destinés à faciliter les opérations de démoulage de l'enveloppe de pneumatique cuite.

Comme le montre l'écorché de la figure 1, cette opération étant réalisée, on recouvre la périphérie du moule (y compris la couronne métallique 6) par un tissu 7, qui peut-être élastomérique, renforcé par des fils aramides 71 parallèles et que l'on dépose sur le moule de sorte que les fils soient orientés radialement. Ce tissu 7 assure que les éléments métalliques 61 restent prisonniers du moule 5 sans empêcher l'extension élastique de ce dernier. En effet, les fils 71 du tissu 7 étant radiaux, ils autorisent l'extension radiale du moule 5.

On dispose ensuite une deuxième membrane 8 élastique réalisée en caoutchouc sur la surface extérieure du moule 5 recouverte de la membrane 7.

On peut également répéter l'opération plusieurs fois afin de disposer de plusieurs couches de tissu renforcé en fonction des résistances à obtenir. Chaque tissu renforcé est séparé du suivant par une couche élastique en matériau élastomérique. C'est, en effet, la présence de ce ou ces tissus renforcés qui permet de résister à l'effort de traction exercé sur les éléments métalliques 61 afin que cette traction entraîne une extension du moule 5 et non une sortie des éléments 61 hors de la rainure 56.

Le moule 5 étant extrait de son « modèle de moulage », il est nécessaire de percer dans le moule des évents 55 qui s'étendent radialement à travers l'épaisseur de ce dernier pour l'utilisation future du moule afin d'autoriser une évacuation de l'air compris entre le moule et la carcasse à rechaper recouverte d'une bande de roulement crue durant le moulage et la vulcanisation de cette bande de roulement.

Selon la figure 2, la surface circonférentielle extérieure du moule annulaire 5 est recouverte d'un manchon drainant élastique 12a permettant l'évacuation de l'air par l'intermédiaire des drains, qui peut être directement déposé sur le moule. Ce manchon drainant 12a peut être solidarisé au moule 5. Ce manchon 12a est lui-même recouvert d'une membrane élastique 13 à base d'un mélange élastomérique vulcanisé, une valve 14 anti-retour étant intégrée à la membrane élastique 13 afin de permettre de faire le vide.

Un tel moule peut être utilisé dans un dispositif de rechapage tel que décrit dans la publication US 4 053 265. On peut également envisager son utilisation dans d'autres types de dispositifs de rechapage tel que celui représenté sur la figure 2.

Selon cette figure 2, le dispositif de rechapage comprend une jante 30 sur laquelle l'enveloppe de pneumatique 1 doit être montée et gonflée, le moule annulaire élastique 5 de moulage de la bande de roulement 3 et deux flasques élastiques 31 et 32 manchonnés destinés à recouvrir les flancs de l'enveloppe de pneumatique 1 et partiellement le sommet 57 du moule 5, afin d'assurer l'étanchéité de l'ensemble carcasse de pneumatique 2, bande de roulement 3 et moule élastique 5. Le dispositif de rechapage mis en place sur une enveloppe de pneumatique est destiné à être placé dans une enceinte chauffée et pressurisée telle qu'une étuve.

Dans ce cas, la membrane 13 est remplacée par les extrémités en forme de manchons des flasques élastiques 31 et 32, il suffit alors que l'un des flasques portent la valve anti-retour 14. Dans cette variante de réalisation du moule, on dispose un profil en U 33 élastique, fretté sur le sommet 57 du moule 5 et maintenu sur la zone centrale dudit moule par les anneaux de traction 11a, les ailes de ce profil en U permettant de réaliser un accrochage des flasques 31 et 32. Une partie du manchon drainant 12a est alors recouverte par le profil en U 33.

Ainsi le moule 5 réalisé permet de réaliser un parfait contrôle de son diamètre en compression et de résoudre les problèmes d'étirement puisqu'il suffit de prévoir dans l'outillage destiné à réaliser la traction du moule 5, la présence de crochets qui coopèrent directement avec les anneaux de traction 11a et permettent d'étirer directement la zone centrale du moule 5.

## Revendications

1. Moule annulaire élastique (5) destiné à assurer le moulage d'une bande de roulement crue (3) recouvrant une carcasse de pneumatique vulcanisée (2), le moule étant réalisé en matériau caoutchouteux, **caractérisé en ce qu'**il comporte un dispositif (56, 61) de limitation de son diamètre en compression.

2. Moule selon la revendication 1, dans lequel le dispositif de limitation comprend au moins une rainure circonférentielle (56) creusée dans la surface extérieure du moule, de réception d'éléments métalliques (61) juxtaposés en position de repos du moule (5) de sorte qu'ils constituent une couronne métallique (6).

3. Moule selon l'une quelconque des revendications 1 ou 2, dans lequel le dispositif de limitation (56, 61) est recouvert par au moins un tissu renforcé (7) par des fils (71) parallèles orientés radialement, ledit tissu (7) recouvrant l'ensemble de la surface extérieure du moule (5).

4. Moule selon la revendication 3, dans lequel le tissu renforcé (7) est recouvert par une couche élastique en matériau élastomérique.

5. Moule selon l'une quelconque des revendications 2 à 4, dans lequel chaque élément métallique (61) comporte en son centre un trou taraudé (63) qui coopère avec un anneau de traction (1 la) du moule (5).

6. Moule selon la revendication 5, dans lequel le moule (5) porte dans la zone centrale de sa surface extérieure un profil en U (33) dont la fixation est assurée par les anneaux de traction (11a).

7. Moule selon l'une quelconque des revendications 1 à 6, dans lequel la surface extérieure du moule (5) est recouverte par un manchon drainant élastique (12a) recouvert par une membrane caoutchouteuse (13) portant une valve à vide anti-retour (14).

8. Moule selon l'ensemble des revendications 6 et 7, dans lequel une partie du manchon drainant (12a) est recouverte par le profil en U (33).

9. Dispositif de chapage d'une carcasse de pneumatique (2) comprenant un moule annulaire élastique (5) selon l'une quelconque des revendication 1 à 8, qui comprend également une jante de montage (30) de ladite carcasse et deux flasques élastiques (31, 32) destinés à recouvrir respectivement la surface extérieure de l'enveloppe de pneumatique (1) constituée par la carcasse (2) et une bande de roulement crue (3) la recouvrant, comprise entre un bourrelet (21, 22) de ladite enveloppe et le bord périphérique (51, 52) du moule correspondant.

## Patentansprüche

1. Ringförmiges, elastisches Formwerkzeug (5), das dazu bestimmt ist, das Abformen einer rohen Lauffläche (3) sicherzustellen, die eine vulkanisierte Reifenkarkasse (2) abdeckt, wobei das Formwerkzeug aus gummiartigem Material gebildet ist, **dadurch gekennzeichnet, daß** es eine Vorrichtung (56, 61) zur Begrenzung seines Durchmessers bei Zusammendrückung aufweist.

2. Formwerkzeug nach Anspruch 1, worin die Vorrichtung zur Begrenzung mindestens eine vertiefte Umfangsrille (56) aufweist, die in der Außenoberfläche des Formwerkzeuges vertieft ist, zur Aufnahme von metallischen Elementen (61), die in Ruhelage des Formwerkzeugs (5) derart nebeneinanderliegen, daß sie einen metallischen Kranz (6) bilden.

3. Formwerkzeug nach irgendeinem der Ansprüche 1 oder 2, worin die Vorrichtung zur Begrenzung (56, 61) durch mindestens einen verstärkten Stoff bzw. ein verstärktes Gewebe (7) aus parallelen Fäden bzw. Drähten (71) abgedeckt ist, die radial ausgerichtet sind, wobei der genannte Stoff (7) die Gesamtheit der Außenoberfläche des Formwerkzeugs (5) abdeckt.

4. Formwerkzeug nach Anspruch 3, worin der verstärkte Stoff (7) durch eine elastische Schicht aus Elastomermaterial abgedeckt ist.

5. Formwerkzeug nach irgendeinem der Ansprüche 2 bis 4, worin jedes metallische Element (61) in seiner Mitte eine Gewindebohrung (63) aufweist, die mit einem Zugring (11a) des Formwerkzeugs (5) zusammenwirkt.

6. Formwerkzeug nach Anspruch 5, worin das Formwerkzeug (5) in der mittleren Zone seiner Oberfläche ein U-Profil (33) aufweist, dessen Befestigung durch den Zugring (11a) sichergestellt ist.

7. Formwerkzeug nach irgendeinem der Ansprüche 1 bis 6, worin die Außenoberfläche des Formwerkzeugs (5) durch einen elastischen Ablaßstutzen (12a) abgedeckt ist, der durch eine gummiartige Membran (13) überdeckt ist, die ein Vakuum-Rückschlagventil (14) trägt.

8. Formwerkzeug nach der Gesamtheit der Ansprüche 6 und 7, worin ein Teil des Ablaßstutzens (12a) vom U-Profil (33) abgedeckt ist.

9. Vorrichtung zum Abdecken einer Reifenkarkasse (2), die ein ringförmiges, elastisches Formwerkzeug (5) nach irgendeinem der Ansprüche 1 bis 8 aufweist, die auch eine Montagefelge (30) der genannten Karkasse und zwei elastische Flansche (31, 32) aufweist, die dazu bestimmt sind, jeweils die Außenoberfläche des Reifenmantels (1) abzudecken, der von der genannten Karkasse (2) und einer rohen Lauffläche (3) gebildet ist, die sie abdeckt, die zwischen einem Wulst (21, 22) des genannten Mantels und dem Umfangsrand (51, 52) des entsprechenden Formwerkzeugs liegt.

## Claims

1. An elastic annular mould (5) intended for moulding an uncured tread (3) covering a vulcanised tyre carcass (2), the mould being made of rubbery material, **characterised in that** it comprises a device (56, 61) for limiting its diameter in compression.

2. A mould according to Claim 1, in which the limitation device comprises at least one circumferential groove (56) formed in the outer surface of the mould, for receiving metallic elements (61) which are juxtaposed in the neutral position of the mould (5) such that they form a metal ring (6).

3. A mould according to any one of Claims 1 or 2, in which the limitation device (56, 61) is covered by at least one fabric (7) reinforced by radially oriented parallel cords (71), said fabric (7) covering the entire outer surface of the mould (5).

4. A mould according to Claim 3, in which the reinforced fabric (7) is covered by an elastic layer of elastomeric material.

5. A mould according to any one of Claims 2 to 4, in which each metallic element (61) comprises at its centre a threaded hole (63) which cooperates with a pulling ring (11a) of the mould (5).

6. A mould according to Claim 5, in which the mould (5) bears in the central zone of its outer surface a U-shaped profile (33) which is fixed by the pulling rings (11a).

7. A mould according to one of Claims 1 to 6, in which the outer surface of the mould (5) is covered by an elastic draining sleeve (12a) covered by a rubber membrane (13) bearing a non-return vacuum valve (14).

8. A mould according to both of Claims 6 and 7, in which part of the draining sleeve (12a) is covered by the U-shaped profile (33).

9. A treading device for a tyre carcass (2) comprising an elastic annular mould (5) according to one of Claims 1 to 8, which also comprises a mounting rim (30) for said carcass and two elastic flaps (31, 32) intended to cover respectively the outer surface of the tyre casing (1) formed by the carcass (2) and an uncured tread (3) covering it, included between a bead (21, 22) of said casing and the peripheral edge (51, 52) of the corresponding mould.
